# EUROPÄISCHE PATENTSCHRIFT

(11) **EP 2 252 481 B1**
(45) Veröffentlichungstag und Bekanntmachung des Hinweises auf die Patenterteilung: **09.04.2014**
(21) Anmeldenummer: 09711490.4
(22) Anmeldetag: 09.02.2009
(51) Int. Cl.: B60R 1/00, B60R 11/04

(54) **KAMERASYSTEM FÜR EIN KRAFTFAHRZEUG MIT EINER KAMERAEINHEIT**
CAMERA SYSTEM FOR A MOTOR VEHICLE HAVING A CAMERA UNIT
SYSTÈME DE CAMÉRA ÉQUIPÉ D'UNE UNITÉ CAMÉRA POUR UN VÉHICULE À MOTEUR

(30) Priorität: 11.02.2008 DE 102008008656
(43) Veröffentlichungstag der Anmeldung: 24.11.2010
(73) Patentinhaber: Huf Hülsbeck & Fürst GmbH & Co. KG, 42551 Velbert (DE)
(72) Erfinder: MÜLLER, Ulrich, 42549 Velbert (DE); EGGERS, Thomas, 42929 Wermelskirchen (DE)
(74) Vertreter: Vogel, Andreas
(86) Internationale Anmeldenummer: PCT/EP2009/051434
(87) Internationale Veröffentlichungsnummer: WO 2009/101044

(56) Entgegenhaltungen:
- EP-A- 0 758 834
- EP-A- 1 332 923
- DE-A1- 19 961 389
- DE-A1-102005 021 671
- DE-A1-102005 021 672
- DE-A1-102005 049 566
- DE-A1-102006 023 103
- DE-U1- 20 219 004
- FR-A- 2 858 280
- JP-A- 2004 182 080

## Beschreibung

Die Erfindung betrifft ein Kamerasystem für ein Kraftfahrzeug mit einer Kameraeinheit, die ein optisches Element aufweist, sowie einem Schutzelement, das in eine Schließstellung und in eine Offenstellung führbar ist, wobei in der Schließstellung die Kameraeinheit in ihrer Ruheposition von außen unzugänglich hinter dem Schutzelement sich befindet, und in der Offenstellung des Schutzelementes die Kameraeinheit sich in der aktiven Position zur Bilderfassung befindet.

Der Einsatz von Kameras zur Fahrzeugumfelderfassung ist bekannt. Derartige Kameras werden beispielsweise als Einpark- und/oder Rangierhilfeeinrichtung für Kraftfahrzeuge verwendet, um insbesondere die mit dem konventionellen Spiegel nicht einsehbaren Bereiche zu erfassen.

In der EP 1 529 688 A1 ist eine Kameraanordnung für Kraftfahrzeuge mit einer Kameraeinheit zur Bilderfassung offenbart, wobei die Kameraeinheit in einer nicht aktiven Position von außen im Wesentlichen unzugänglich hinter einem schwenkbaren Schutzelement angeordnet ist. Ferner wird in der Schrift DE 10 2005 021 672 A1 eine Wischeinrichtung offenbart, welche an einer Schutzeinrichtung angeordnet ist. In der Praxis hat sich herausgestellt, dass ein optisches Element der Kameraeinheit der Beanspruchung durch Feuchtigkeit und Schmutz ausgesetzt sind. Diese Verunreinigungen führen dazu, dass die Qualität der Bilderfassung auf Grund von Verunreinigungen auf den optischen Elementen der Kameraeinheit zumindest zeitweise eingeschränkt wird.

Es ist Aufgabe der vorliegenden Erfindung, eine Kamerasystem für ein Kraftfahrzeug mit einer Kameraeinheit zu schaffen, welche die oben genannten Nachteile vermeidet, insbesondere eine gleich bleibende Qualität der Bilderfassung mittels des optischen Elementes der Kameraeinheit jederzeit gewährleistet wird.

Zur Lösung dieser Aufgabe wird ein Kamerasystem mit den Merkmalen des Anspruches 1 vorgeschlagen. In den abhängigen Ansprüchen sind bevorzugte Weiterbildungen ausgeführt.

Dazu ist erfindungsgemäß eine Reinigungseinheit vorgesehen, die zur Reinigung des optischen Elementes der Kameraeinheit dient. Mittels der Reinigungseinheit sollen Verschmutzungen des optischen Elementes zum Beispiel mechanisch entfernbar sein.

Des Weiteren kann vorgesehen sein, dass ein Reinigungsvorgang durch die Reinigungseinheit sowohl in der Schließstellung als auch in der Offenstellung des Schutzelementes durchführbar ist. Zur Sicherstellung der Einsatzbereitschaft der Kameraeinheit kann es sinnvoll sein das optische Element der Kameraeinheit, unabhängig von der Stellung des Schutzelementes, einem Reinigungsvorgang zu unterziehen. Die Kameraeinheit kann beispielsweise eine CCD-Kamera sein. Die Bilderfassung erfolgt über das optische Element, insbesondere Objektiv, wobei das aufgenommene Bild auf ein Raster von lichtempfindlichen Sensoren (CCD-Chip) der Kamera projiziert wird. Vorzugsweise gibt es pro Bildpunkt drei Sensoren, die jeweils auf die Lichtwellenlänge einer der drei Grundfarben ansprechen. Ebenfalls ist es denkbar, dass die Kameraeinheit als Laserscanner ausgeführt ist, der insbesondere zur Hinderniserkennung geeignet ist. Der Laserscanner gibt vorzugsweise einen Laserstrahl aus und erkennt die Koordinaten, an denen der Strahl auftrifft. Vorteilhafterweise hat der Laserscanner eine Reichweite bis zu 300 m in einem Umkreis von bis zu 300°.

Vorteilhafterweise kann die Reinigungseinheit zumindest ein Reinigungselement aufweisen, das insbesondere eine Düse oder eine Reinigungsfläche ist. Beispielsweise kann hierbei die Reinigungsfläche als Gummilippe, Schwamm oder Filz ausgeführt sein. Ferner wäre ein Ultraschallgerät als Reinigungselement ebenfalls denkbar.

In einer möglichen Ausführungsform der Erfindung kann ein aus dem Reinigungselement austretendes Säuberungsmittel auf das optische Element wirken, wobei der Aggregatzustand des Säuberungsmittels gasförmig und/oder flüssig sein kann. Hierbei wären mit Reinigungsmitteln angereicherte Liquide auf Wasserbasis denkbar, die das Lösen von Verschmutzungen des optischen Elementes unterstützen. Bevorzugt verlässt hierbei das Säuberungsmittel mit einem Überdruck die Düse in Richtung des optischen Elementes. Als besonders vorteilhaft hat es sich herausgestellt, wenn das Säuberungsmittel einen Druck von 2 bis 10 bar und eine Temperatur von 140 bis 200°C aufweist. Die Düse kann beispielsweise als eine hochdrucktaugliche Zerstäuberdüse ausgebildet sein, mit der ein Säuberungsmittel-Luft-Gemisch erzeugt wird, welches auf das optische Element reinigend wirkt. Durch die Zerstäuberdüse wird ein fein verteiltes Säuberungsmittel-Luft-Gemisch erzeugt, das gleichmäßig auf das optische Element sich niederschlägt.

In einer weiteren Ausführungsform der Erfindung kann die Düse als Ultraschallzerstäuberdüse ausgeführt sein, die eine zufriedenstellende Säuberungsmittel-Luft-Vernebelung, die auch als Säuberungsmittel-Luft-Aerosol bezeichnet werden kann, erzielt wird. Diese Düse kann beispielsweise mit einem Zerstäubergehäuse aufgeführt sein, in dem Spritzöffnungen vorgesehen sind, die von einem Druckraum im Inneren des Zerstäubergehäuses nach außen führen. Das im Inneren der Reinigungseinheit sich befindende Reinigungsmittel tritt über die Spritzöffnungen als feiner Reinigungsmittelstrahl aus und wird durch einen auf der Düse aufgesetzten Ultraschallschwinger zu einem Zerfall in Säuberungsmitteltröpfchen angeregt, wodurch ein Reinigungsmittel-Luft-Gemisch entsteht. Auch hierdurch kann auf einfache Weise eine große Menge des Aerosols bereitgestellt werden, um eine gewünschte Reinigung des optischen Elementes wirksam zu erzielen.

In einer weiteren bevorzugten Ausführungsform erfolgt der Reinigungsvorgang periodisch. Insbesondere die Wirkzeit des auf das optische Element aufgetragenen Säuberungsmittels, das zur Lösung von Verschmutzungen dient, kann den Zeitraum zwischen den Anwendungen des Reinigungselementes innerhalb eines Reinigungsvorganges festlegen. Vorteilhaft ist hierbei, wenn nach dem Reinigungsvorgang ein Trocknungsvorgang des optischen Elementes durch die Reinigungseinheit erfolgt. Durch die Durchführung eines Trocknungsvorganges werden auf dem optischen Element verbleibende Restpartikel nach dem Reinigungsvorgang entfernt. Hierbei wäre es denkbar mit Hilfe eines mit Überdruck aus dem Reinigungselement austretenden gasförmigen Reinigungsmittel die Restpartikel zu entfernen. Ein Absaugen der Säuberungsmittelreste von dem optischen Element mittels Unterdruck wäre ebenso möglich. In einer weiteren Ausführungsform könnte ein "Abziehen" der Oberfläche des optischen Elementes mittels einer Reinigungslippe sinnvoll sein.

Bei dem erfindungsgemäßen Kamerasystem kann ein Ablauf vorgesehen sein, der bei der Reinigung des optischen Elementes auftretende Rückstände abführt. Diese Ausführungsform kann vorteilhaft sein, wenn der Reinigungsvorgang in der Ruheposition der Kameraeinheit und in der Schließstellung des Schutzelements erfolgt.

In einer möglichen Ausführungsform der Erfindung ist die Kameraeinheit über einen Antrieb, insbesondere einen Motor in eine Ruheposition und in eine aktive Position bringbar. Vorteilhaft ist hierbei, dass die Stellung der Reinigungseinheit entsprechend der Position des optischen Elementes veränderbar ist. Somit kann die Reinigung des optischen Elementes sowohl im aktiven Zustand als auch im Ruhezustand ermöglicht werden. Durch die Reinigung des optischen Elementes in der Ruheposition der Kameraeinheit kann eine "Betriebsbereitschaft" des optischen Elementes bereits bei der

Überführung der Kameraeinheit von der Ruheposition in die aktive Position gewährleistet werden. Selbstverständlich ist es denkbar, dass die Kameraeinheit starr und unbeweglich innerhalb des Kamerasystems angeordnet ist, wobei die Ruheposition gleichzeitig der aktiven Position entspricht. Bei dieser Ausführungsform der Erfindung ist es somit nicht notwendig über ein Antriebselement, wie beispielsweise einen Motor, die Kameraeinheit jeweils in ihre Position zu bewegen. Es reicht vollkommen aus, lediglich das Schutzelement von der Schließstellung in die Offenstellung und umgekehrt zu überführen.

In einer weiteren bevorzugten Ausführungsform wird der Reinigungsvorgang des optischen Elementes bei der Überführung der Kameraeinheit von der Ruheposition in die aktive Position und/oder umgekehrt ausgeführt. Vorteilhafterweise ist die Reinigungseinheit insbesondere das Reinigungselement am Schutzelement integriert. Als besonders vorteilhaft hat sich hierbei erwiesen, dass während der Bewegung des Schutzelementes in seine jeweilige Stellung gleichzeitig das Reinigungselement das optische Element kontaktiert und mechanisch reinigt. Somit wird gewährleistet, dass bei der Überführung der Kameraeinheit in die aktive Position eine "automatische" Reinigung des optischen Elementes über das Schutzelement erfolgt und beim Start der Bilderfassung ein gereinigter Zustand des optischen Elementes vorliegt.

Erfindungsgemäß kann weiterhin vorgesehen sein, dass der Reinigungsvorgang und/oder der Trocknungsvorgang manuell und/oder automatisch über eine Steuerungseinheit aktivierbar ist. Für die automatische Aktivierung wäre der Einsatz eines Schmutz detektierenden Sensors möglich, der den Zustand des optischen Elementes überwacht und gegebenenfalls den Reinigungs- und/oder Trocknungsvorgang initiiert. Besonders vorteilhaft wäre hierbei, wenn eine Software die vom Sensor gewonnenen Informationen auswertet, um die Reinigung des optischen Elementes zu optimieren. Eine kontinuierlich periodische Reinigung des optischen Elementes wäre auch möglich. Für die manuelle Aktivierung des Reinigungs- und/oder Trocknungsvorganges wären ein Klipp-, Druck-, Schiebeschalter und/oder ein Schalterarm innerhalb der Fahrerkabine denkbar. Nach einer weiteren vorteilhaften Ausgestaltung der Erfindung ist eine akustische und/oder grafische Warneinrichtung vorgesehen. Der Fahrer innerhalb der Fahrerkabine erhält beispielsweise über die genannte Steuerungseinheit die Warninformation, beispielsweise durch akustische Signaltöne oder durch eine grafische Leuchtdiodenanzeige, dass eine Verschmutzung des optischen Elementes vorliegt. Eine manuelle oder eine automatische Initiierung des Reinigungsvorganges ist anschließend denkbar.

Erfindungsgemäß ist die Reinigung des optischen Elementes durch die Anwendung einer Abfolge von Reinigungselementen umsetzbar, wobei der Einsatz der Säuberungsmittel und/oder Reinigungselemente kombinierbar ist. Zum Beispiel kann zunächst ein Aufbringen von Säuberungsmitteln mittels einer Düse auf das optische Element erfolgen. Es folgt ein Abziehvorgang mittels einer Gummilippe, die unmittelbar über das optische Element entlang fährt. Des Weiteren ist es denkbar, dass zuerst über die Düse ein liquides Säuberungsmittel auf das optische Element aufgebracht wird. In einem zweiten Schritt können liquide Säuberungsmittelreste, die noch Schmutzpartikel enthalten können, über ein weiteres Säuberungsmittel, zum Beispiel Druckluft von dem optischen Element, entfernt werden.

Eine weitere mögliche Ausführungsform der Erfindung sieht vor, dass die Reinigungseinheit mit dem Antrieb der Kameraeinheit und/oder des Schutzelementes gekoppelt ist. Diese Kopplung ermöglicht die automatische Anpassung der Position der Reinigungseinheit an die Position der Kameraeinheit. Durch eine Kopplung der Bewegung der Kameraeinheit und der Reinigungseinheit kann der Reinigungsvorgang unabhängig von der Position der Kameraeinheit gewährleistet werden. Der Antrieb kann beispielsweise ein Elektromagnet sein.

In einer weiteren vorteilhaften Ausführungsform der Erfindung ist vorgesehen, dass die Reinigungseinheit einen Aufnahmebereich aufweist, in dem sich während des Reinigungsvorganges das optische Element befindet. Der Boden des Aufnahmebereiches kann über eine Neigung verfügen, die die Zuführung von Schmutz und/oder Reinigungsmittelrückständen zu einem Ablauf innerhalb Aufnahmebereiches ermöglicht. Vorteilhaft ist hierbei, wenn das optische Element in den Aufnahmebereich hineinragt. Der Aufnahmebereich dient hierbei als eine Art geschlossener Reinigungsraum für das optische Element, wobei gleichzeitig sichergestellt wird, dass die Reinigungsmittelrückstände zuverlässig abgeführt werden können, ohne dass die Gefahr besteht, dass die auf das optische Element wirkenden Säuberungsmittel die Funktionsweise weiterer Bauteile des Kamerasystems nachteilig beeinflussen.

Besonders vorteilhaft ist es, wenn der Aufnahmebereich während des Reinigungsvorganges einen geschlossenen Raum darstellt. Der Abschluss des Aufnahmebereiches kann durch den Einsatz eines Verschlusselementes erfolgen, das am Aufnahmebereich angeordnet ist und gleichzeitig die Kameraeinheit umfangsseitig kontaktiert. Das Verschlusselement kann beispielsweise gummielastische Eigenschaften aufweisen und als Ringkörper ausgeführt sein, der eine Bohrung aufweist, durch die die Kameraeinheit in ihrer aktiven Position hineinragt, wobei sich das optische Element innerhalb des Aufnahmebereiches befindet. Somit ist eine Reinigung im gekapselten Zustand des optischen Elementes möglich. Erfindungsgemäß kann vorgesehen sein, dass das optische Element in den Aufnahmebereich oder der Aufnahmebereich zum optischen Element verfahrbar ist. Eine parallele Annäherungsbewegung sowohl des optischen Elementes als auch des Aufnahmebereiches zueinander ist auch denkbar.

Ferner kann erfindungsgemäß vorgesehen sein, dass das optische Element eine Oberflächenbeschichtung aufweist, die einer Verschmutzung entgegenwirkt. Diese Oberflächenbeschichtung kann sowohl reversibel in Form einer Folie oder irreversibel in Form einer Beschichtung mit hydrophoben Eigenschaften sein.

Eine weitere die Funktionalität erweiternde Maßnahme kann vorsehen, dass die Reinigungseinheit eine Heizung aufweist, die eine Erwärmung des optischen Elementes bewirkt. Die Heizung kann mittels Strahlungswärme direkt auf das optische Element wirken und zum Beispiel Feuchtigkeit entfernen. Zum anderen kann die Heizung zur Erwärmung des Säuberungsmittels dienen, wodurch eine Vereisung des Reinigungsmittels, das insbesondere ein auf Wasser basierendes Liquid sein kann, verhindert werden kann. Eine Beseitigung einer Vereisung des optischen Elementes kann ebenfalls über ein vorgewärmtes gasförmiges Säuberungsmittel erfolgen.

Des Weiteren kann verbessernd vorgesehen sein, dass die Düse eine Vakuumdüse ist, der insbesondere ein Filterelement nachgeschaltet ist. Das Filterelement dient hierbei dazu, die von der Vakuumdüse vom optischen Element abgesaugten Verunreinigungen innerhalb des Abluftstromes zu filtern und abzuführen.

Das erfindungsgemäße Kamerasystem kann beispielsweise als Teil eines Einparkhilfe-Systems eines Kraftfahrzeuges dienen. Somit kann die Kameraeinheit im Heckbereich und im Frontbereich des Kraftfahrzeuges vorgesehen sein. Alternativ kann das Kamerasystem zur Überwachung von Zusammenstößen in einem Sicherungssystem beim Fahren des Kraftfahrzeuges zum Einsatz kommen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: ein erfindungsgemäßes Kamerasystem, wobei die Kameraeinheit in ihrer Ruheposition und das Schutzelement in der Schließstellung sich befinden,
- Fig. 2: das System gemäß Fig. 1, wobei das Schutzelement in einer ersten Offenstellung sich befindet,
- Fig. 3: das erfindungsgemäße Kamerasystem gemäß Fig. 1, wobei sich das Schutzelement in einer weiteren Offenstellung befindet und die Kameraeinheit die aktive Position einnimmt,
- Fig. 4: ein weiteres Kamerasystem mit einem Aufnahmebereich, für das optische Element der Kameraeinheit,
- Fig. 5: eine weitere Ausführungsform eines Kamerasystems mit einem am Schutzelement angeordneten Reinigungselement,
- Fig. 6: eine weitere Alternative eines Kamerasystems mit einer Reinigungseinheit und
- Fig. 6a: eine Detailansicht des Kamerasystems aus Fig. 6.

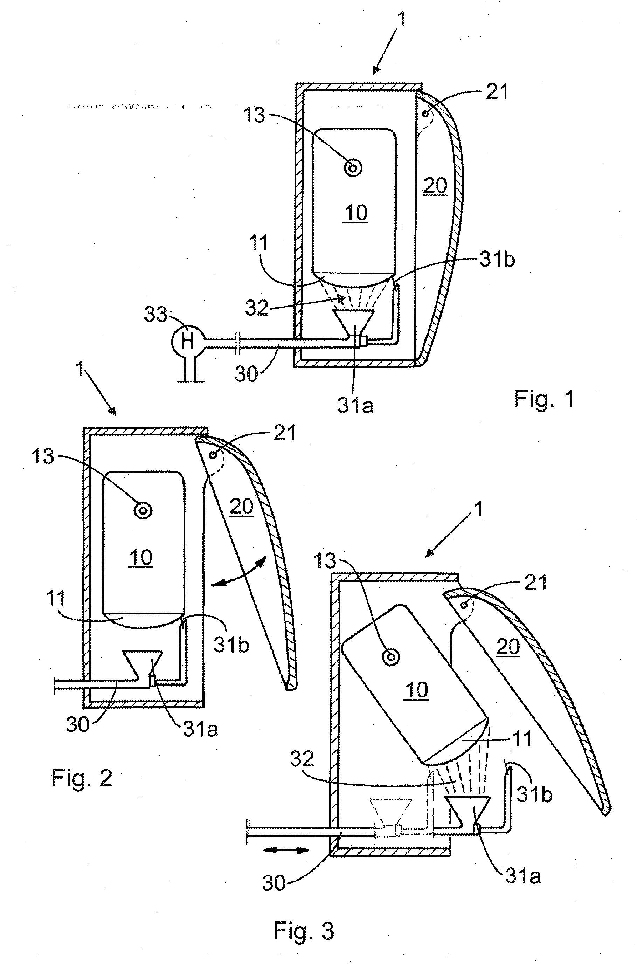

In den Fig. 1 bis 3 ist eine erste mögliche Ausführungsform eines Kamerasystems 1 für ein Kraftfahrzeug mit einer Kameraeinheit 10 dargestellt. Fig. 1 zeigt das Kamerasystem 1, wobei die Kameraeinheit 10 sich in einer Ruheposition befindet. Die Kameraeinheit 10 ist an einer ersten Achse 13 innerhalb des Kamerasystems 1 über einen nicht dargestellten Antrieb drehbar gelagert. Das Kamerasystem 1 weist ein Schutzelement 20 auf, das mit einer zweiten Achse 21 an dem Kamerasystem 1 beweglich gelagert ist. Das Schutzelement 20 nimmt eine Schließstellung ein. Die Kameraeinheit 10 weist ein optisches Element 11 auf, unterhalb dem sich eine Reinigungseinheit 30 befindet, an der Reinigungselemente 31a und 31b integriert sind. Die Reinigungselemente 31 sind mittels der Reinigungseinheit 30 translatorisch von ihrer Ausgangsposition in Richtung des Schutzelementes 20 und zurück bewegbar. Die Positionierbarkeit der Reinigungseinheit 30 kann mittels einer nicht dargestellten Kopplung zwischen dem Antrieb der Kameraeinheit 10 und der Reinigungseinheit 30 erfolgen. Ein separater Antrieb für die Reinigungseinheit 30 wäre ebenso denkbar. Das Reinigungselement 31a ist als Düse 31a ausgestaltet, durch die Säuberungsmittel 32, hier ein auf Wasser basierendes Liquid 32, auf die Oberfläche des optischen Elementes 11 aufgebracht wird.

Das zweite Reinigungselement 31 b ist als Gummilippe ausgestaltet. Ferner ist eine Heizung 33 an der Reinigungseinheit 30 integriert. In dem dargestellten Beispiel ist die Heizung 33 als Durchlauferhitzer ausgestaltet und erwärmt das Säuberungsmittel 32.

Fig. 2 zeigt das Kamerasystem 1 mit geöffnetem Schutzelement 20, wobei die Kameraeinheit 10 sich in ihrer Ruheposition befindet. Beim Übergang des optischen Elementes 11 von der Ruheposition in die aktive Position (siehe Fig. 3), reinigt das Reinigungselement 31 mechanisch das optische Element 11. Während die Kameraeinheit 10 um ihre Achse 13 in Richtung des Schutzelementes 20 nach außen sich verschwenkt, verbleibt die Reinigungseinheit 30 mit der Gummilippe 31b in ihrer Position. Bei der Schwenkbewegung der Kameraeinheit 10 gleitet somit das optische Element 11 entlang der Gummilippe 31 b, wodurch eine mechanische Reinigung der Oberfläche des optischen Elementes 11 erzielt wird.

In Fig. 3 ist die um die erste Achse 13 drehbar gelagert dargestellte Kameraeinheit 10 in ihrer aktiven Position dargestellt. Das Schutzelement 20, das um die zweite Achse 21 drehbar gelagert ist, ist in einer Offenstellung dargestellt. Zur Reinigung des optischen Elementes 11 in der aktiven Position der Kameraeinheit 10 wird die Reinigungseinheit 30 in Richtung des Schutzelementes 20 bewegt. Hierbei befindet sich die Düse 31 außerhalb der Kameraeinheit 10. In dieser Position der Düse 31a erfolgt der Reinigungsvorgang, bei dem das Liquid 32 in Richtung des optischen Elementes 11 gesprüht wird. Hierdurch wird unter anderem vermieden, dass das liquide Säuberungsmittel 32 in das Innere des Kamerasystems 1 gelangt.

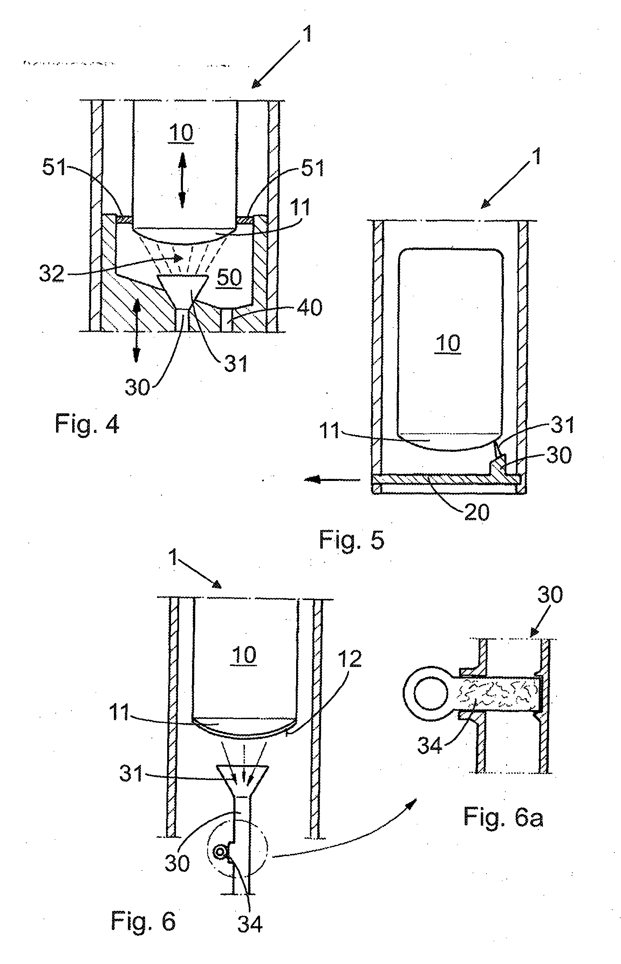

Fig. 4 zeigt das Kamerasystem 1 mit einem Aufnahmebereich 50. Die Kameraeinheit 10 ragt in den Aufnahmebereich 50 hinein. Im Bodenbereich des Aufnahmebereiches 50 ist ein Ablauf 40 ausgebildet. Der Bodenbereich des Aufnahmebereiches 50 ist geneigt ausgestaltet, damit die aus der Düse 31 der Reinigungseinheit 30 austretenden Säuberungsmittel 32, z. B. auf Wasser basierende Reinigungsliquide 32, zum Ablauf 40 gelangen können.

Zur Kapselung des Reinigungsvorganges innerhalb des Aufnahmebereiches 50 ist der Aufnahmebereich 50 oberhalb des optischen Elementes 11 mittels eines Verschlusselementes 51 verschließbar. Hierfür ist das Verschlusselement 51 als Gummiring 51 ausgeführt. Der Innendurchmesser des Gummiringes 51 ist dem Außendurchmesser der Kameraeinheit 10 entsprechend angepasst. Durch den Verschluss des Aufnahmebereiches 50 wird ein Austreten des Säuberungsmittels 32 in Bereiche des Kamerasystems 1 außerhalb des Aufnahmebereiches 50 verhindert. Zur Einbringung des optischen Elementes 11 in den Aufnahmebereich 50 ist der Aufnahmebereich 50 in Richtung der Kameraeinheit 10 verschiebbar. Alternativ oder zusätzlich kann die Kameraeinheit 10 ebenfalls in Richtung des Aufnahmebereiches 50 über einen nicht dargestellten Antrieb translatorisch bewegt werden.

In Fig. 5 ist ein weiteres Ausführungsbeispiel des Kamerasystems 1 dargestellt, bei dem das Schutzelement 20 translatorisch verschiebbar gelagert ist. Ferner ist am Schutzelement 20 die Reinigungseinheit 30 mit dem Reinigungselement 31 montiert. Das Reinigungselement 31 ist in diesem Ausführungsbeispiel als Gummilippe 31 ausgeführt. Beim Verschieben des Schutzelementes 20 in die Offenstellung wird die Oberfläche des optischen Elementes 11 mittels der Gummilippe 31 mechanisch gereinigt. Dieser Reinigungsvorgang wiederholt sich analog bei der Überführung des Schutzelementes 20 in seine Schließstellung. Bei dieser Ausführungsform ist die Kameraeinheit 10 unbeweglich innerhalb des Kamerasystems 1 angeordnet, das bedeutet, dass die aktive Position zur Bilderfassung der Ruheposition entspricht.

Bei dem in Fig. 6 dargestellten Kamerasystem 1 ist das optische Element 11 der Kameraeinheit 10 mit einer Oberflächenbeschichtung 12 ausgeführt. Die Oberflächenbeschichtung 12 dient zum einen zur Verschmutzungsreduzierung und zum anderen zum Schutz vor Beschädigung durch mechanisches Einwirken auf das optische Element 11. Ferner ist das Reinigungselement 31 der Reinigungseinheit 30 als Absaugdüse 31 ausgestaltet. Unterhalb des Reinigungselementes 31 ist die Reinigungseinheit 30 mit einem Einschub ausgestaltet, der ein Filterelement 34 aufnimmt. Während des Reinigungsprozesses des optischen Elementes 11 sammeln sich die Schmutzpartikel des Abluftstromes im Filterelement 34. In Fig. 6a ist die Lage des Filterelementes 34 innerhalb der Reinigungseinheit 30 dargestellt. Das Filterelement 34 ist verschiebbar innerhalb der Reinigungseinheit 30 gelagert. Zur manuellen Entnahme des Filterelementes 34 aus der Reinigungseinheit 30 ist das Filterelement 34 außerhalb der Reinigungseinheit 30 mit einem ringförmigen Griffstück ausgestaltet.

### Bezugszeichenliste

- 1: Kamerasystem

- 10: Kameraeinheit
- 11: optisches Element
- 12: Oberflächenbeschichtung
- 13: erste Achse

- 20: Schutzelement
- 21: zweite Achse

- 30: Reinigungseinheit
- 31a,b: Reinigungselement
- 32: Säuberungsmittel
- 33: Heizung
- 34: Filterelement

- 40: Ablauf

- 50: Aufnahmebereich
- 51: Verschlusselement

## Patentansprüche

1. Kamerasystem (1) für ein Kraftfahrzeug mit einer Kameraeinheit (10), die ein optisches Element (11) aufweist, sowie einem Schutzelement (20), das in eine Schließstellung und in eine Offenstellung führbar ist, wobei
in der Schließstellung sich die Kameraeinheit (10) in ihrer Ruheposition von außen unzugänglich hinter dem Schutzelement (20) befindet, und in der Offenstellung des Schutzelementes (20) die Kameraeinheit (10) sich in der aktiven Position zur Bilderfassung befindet, **dadurch gekennzeichnet,**
**dass** eine Reinigungseinheit (30) vorgesehen ist, die zur Reinigung des optischen Elementes (11) der Kameraeinheit (10) dient, wobei ein Reinigungsvorgang durch die Reinigungseinheit (30) sowohl in der Schließstellung als auch in der Offenstellung des Schutzelementes (20) durchführbar ist.

2. Kamerasystem (1) nach Anspruch 1, **dadurch gekennzeichnet,**
**dass** die Reinigungseinheit (30) zumindest ein Reinigungselement (31) aufweist, das insbesondere eine Düse oder eine Reinigungsfläche ist, wobei insbesondere ein aus dem Reinigungselement (31) austretendes Säuberungsmittel (32) auf das optische Element (11) wirkt, wobei der Aggregatzustand des Säuberungsmittels (32) gasförmig und/oder flüssig ist und/oder wobei insbesondere das Säuberungsmittel (32) mit einem Überdruck die Düse (31) in Richtung des optischen Elementes (11) verlässt und/oder wobei insbesondere das Säuberungsmittel (32) einen Druck von 2 -10 bar und eine Temperatur von 140 -200 °C hat.

3. Kamerasystem (1) nach einem der vorhergehenden Ansprüche, **dadurch gekennzeichnet,**
**dass** die Düse (31) eine Vakuumdüse (31) ist, der insbesondere ein Filterelement (34) nachgeschaltet ist.

4. Kamerasystem (1) nach einem der vorhergehenden Ansprüche, **dadurch gekennzeichnet,**
**dass** die Anwendung des Reinigungselementes (31) während des Reinigungsvorganges periodisch erfolgt und/oder wobei insbesondere nach dem Reinigungsvorgang ein Trocknungsvorgang des optischen Elementes (11) durch die Reinigungseinheit (30) durchführbar ist.

5. Kamerasystem (1) nach einem der vorhergehenden Ansprüche, **dadurch gekennzeichnet,**
**dass** ein Ablauf (40) vorgesehen ist, der bei der Reinigung des optischen Elementes (11) auftretende Rückstände abführt.

6. Kamerasystem (1) nach einem der vorhergehenden Ansprüche, **dadurch gekennzeichnet,**
**dass** die Kameraeinheit (10) über einen Motor in eine Ruheposition und in eine aktive Position bringbar ist.

7. Kamerasystem (1) nach einem der vorhergehenden Ansprüche, **dadurch gekennzeichnet,**
**dass** die Stellung der Reinigungseinheit (30) entsprechend der Position des optischen Elementes (11) veränderbar ist.

8. Kamerasystem (1) nach einem der vorhergehenden Ansprüche, **dadurch gekennzeichnet,**
**dass** der Reinigungsvorgang des optischen Elementes (11) bei der Überführung der Kameraeinheit (10) von der Ruheposition in die aktive Position und/oder umgekehrt ausführbar ist.

9. Kamerasystem (1) nach einem der vorhergehenden Ansprüche, **dadurch gekennzeichnet,**
**dass** die Reinigung des optischen Elementes (11) durch die Anwendung einer Abfolge von Reinigungselementen (31) umsetzbar ist, wobei der Einsatz der Säuberungsmittel (32) und/oder der Reinigungselemente (31) kombinierbar ist.

10. Kamerasystem (1) nach einem der vorhergehenden Ansprüche, **dadurch gekennzeichnet,**
**dass** die Reinigungseinheit (30) mit dem Motor der Kameraeinheit (10) und/oder des Schutzelementes (20) gekoppelt ist.

11. Kamerasystem (1) nach einem der vorhergehenden Ansprüche, **dadurch gekennzeichnet,**
**dass** die Reinigungseinheit (30), insbesondere das Reinigungselement (31) am Schutzelement (20) integriert ist.

12. Kamerasystem (1) nach einem der vorhergehenden Ansprüche, **dadurch gekennzeichnet,**
**dass** während der Bewegung des Schutzelementes (20) in seine jeweilige Stellung gleichzeitig das Reinigungselement (31) das optische Element (11) kontaktiert und mechanisch reinigt.

13. Kamerasystem (1) nach einem der vorhergehenden Ansprüche, **dadurch gekennzeichnet,**
**dass** der Reinigungsvorgang und/oder Trocknungsvorgang manuell oder über eine Steuerungseinheit automatisch aktivierbar ist.

14. Kamerasystem (1) nach einem der vorhergehenden Ansprüche, **dadurch gekennzeichnet,**
**dass** die Reinigungseinheit (30) einen Aufnahmebereich (50) aufweist, in dem sich während des Reinigungsvorganges das optische Element (11) befindet, wobei insbesondere das optische Element (11) in den Aufnahmebereich (50) hineinragt und/oder wobei insbesondere der Aufnahmebereich (50) während des Reinigungsvorganges verschlossen ist, wobei insbesondere das optische Element (11) in den Aufnahmebereich (50) oder der Aufnahmebereich (50) zum optischen Element (11) verfahrbar ist.

15. Kamerasystem (1) nach einem der vorhergehenden Ansprüche, **dadurch gekennzeichnet,**
**dass** das optische Element (11) eine Oberflächenbeschichtung (12) aufweist, die einer Verschmutzung entgegenwirkt und/oder wobei insbesondere die Reinigungseinheit (30) eine Heizung (33) aufweist, die eine Erwärmung des optischen Elementes (11) bewirkt.

## Claims

1. A camera system (1) for a motor vehicle, comprising a camera unit (10) that has an optical element (11) and a protective element (20) that can be guided in a closed position and in an open position, wherein
in the closed position, the camera unit (10) is in its idle position behind said protective element (20) and is inaccessible from the outside, and in the open position of the protective element (20), the camera unit (10) is in the active position for image acquisition,
**characterized in that**
a cleaning unit (30) is provided that serves for cleaning the optical element (11) of the camera unit (10), wherein a cleaning process can be carried out by the cleaning unit (30) in the closed position as well as in the open position of the protective element (20).

2. The camera system (1) according to claim 1,
**characterized in that**
the cleaning unit (30) has at least one cleaning element (31) that is in particular a nozzle or a cleaning surface, wherein in particular a detergent (32) exiting from the cleaning element (31) acts on the optical element (11), wherein the aggregation state of the detergent (32) is gaseous and/or liquid, and/or wherein in particular the detergent (32) leaves the nozzle (31) with overpressure towards the optical element (11), and/or wherein in particular the detergent (32) has a pressure of 2 - 10 bar and a temperature of 140 - 200 °C.

3. The camera system (1) according to any one of the preceding claims,
**characterized in that**
the nozzle (31) is a vacuum nozzle (31), downstream of which a filter element (34) is arranged.

4. The camera system (1) according to any one of the preceding claims,
**characterized in that**
the use of the cleaning element (31) during the cleaning process takes place periodically, and/or wherein in particular after the cleaning process, a drying process of the optical element (11) can be carried out by the cleaning unit (30).

5. The camera system (1) according to any one of the preceding claims,
**characterized in that**
a drain (40) is provided which discharges the residues occurring during the cleaning of the optical element (11).

6. The camera system (1) according to any one of the preceding claims,
**characterized in that**
the camera unit (10) can be brought via a motor into an idle position and into an active position.

7. The camera system (1) according to any one of the preceding claims,
**characterized in that**
the position of the cleaning unit (30) can be changed corresponding to the position of the optical element (11).

8. The camera system (1) according to any one of the preceding claims,
**characterized in that**
the cleaning process of the optical element (11) can be carried out during the transfer of the camera unit (10) from the idle position into the active position and/or vice versa.

9. The camera system (1) according to any one of the preceding claims,
**characterized in that**
cleaning the optical element (11) can be implemented by using a sequence of cleaning elements (31), wherein the use of the detergents (32) and/or the cleaning elements (31) can be combined.

10. The camera system (1) according to any one of the preceding claims,
**characterized in that**
the cleaning unit (30) is coupled to the motor of the camera unit (10) and/or the protective element (20).

11. The camera system (1) according to any one of the preceding claims,
**characterized in that**
the cleaning unit (30), in particular the cleaning element (31), is integrated on the protective element (20).

12. The camera system (1) according to any one of the preceding claims,
**characterized in that**
during the movement of the protective element (20) into its respective position, the cleaning element (31) contacts and mechanically cleans the optical element (11) at the same time.

13. The camera system (1) according to any one of the preceding claims,
**characterized in that**
the cleaning process and/or the drying process is manually actuatable or automatically via a control unit.

14. The camera system (1) according to any one of the preceding claims,
**characterized in that**
the cleaning unit (30) has a receiving region (50) in which the optical element (11) is situated during the cleaning process, wherein in particular the optical element (11) protrudes into the receiving region (50), and/or wherein in particular the receiving region (50) is closed during the cleaning process, wherein in particular the optical element (11) can be moved into the receiving region (50) or the receiving region (50) can be moved to the optical element (11).

15. The camera system (1) according to any one of the preceding claims,
**characterized in that**
the optical element (11) has a surface coating (12) that counteracts soiling, and/or wherein in particular the cleaning unit (30) has a heater (33) that effects heating of the optical element (11).

## Revendications

1. Système de caméra (1) pour un véhicule à moteur, comprenant une unité de caméra (10) qui présente un élément optique (11), ainsi qu'un élément de protection (20) qui peut être déplacé dans une position fermée et dans une position ouverte,
sachant que dans la position fermée, l'unité de caméra (10) se trouve dans sa position de repos, inaccessible de l'extérieur derrière l'élément de protection (20), et dans la position ouverte de l'élément de protection (20), l'unité de caméra (10) se trouve dans la position active permettant une prise d'images,
**caractérisé en ce**
**qu'**une unité de nettoyage (30) est prévue, qui sert à nettoyer l'élément optique (11) de l'unité de caméra (10), une opération de nettoyage par l'unité de nettoyage (30) étant réalisable aussi bien dans la position fermée que dans la position ouverte de l'élément de protection (20).

2. Système de caméra (1) selon la revendication 1,
**caractérisé en ce**
**que** l'unité de nettoyage (30) présente au moins un élément de nettoyage (31) qui est en particulier une buse ou une surface de nettoyage, en particulier un produit de nettoyage (32) qui sort de l'élément de nettoyage (31) agissant sur l'élément optique (11), lequel produit de nettoyage (32) est à l'état gazeux et/ou liquide, et/ou en particulier le produit de nettoyage (32) quittant la buse (31) en direction de l'élément optique (11) avec une surpression et/ou en particulier le produit de nettoyage (32) ayant une pression de 2 à 10 bars et une température de 140 à 200 °C.

3. Système de caméra (1) selon une des revendications précédentes,
**caractérisé en ce**
**que** la buse (31) est une buse d'aspiration (31), en aval de laquelle est monté en particulier un élément filtrant (34).

4. Système de caméra (1) selon une des revendications précédentes,
**caractérisé en ce**
**que** l'élément de nettoyage (31) est utilisé périodiquement pendant l'opération de nettoyage, en particulier une opération de séchage de l'élément optique (11) étant réalisable par l'unité de nettoyage (30) après l'opération de nettoyage.

5. Système de caméra (1) selon une des revendications précédentes,
**caractérisé en ce**
**qu'**un orifice de sortie (40) est prévu, qui évacue les résidus produits lors du nettoyage de l'élément optique (11).

6. Système de caméra (1) selon une des revendications précédentes,
**caractérisé en ce**
**que** l'unité de caméra (10) peut être déplacée par un moteur dans une position de repos et dans une position active.

7. Système de caméra (1) selon une des revendications précédentes,
**caractérisé en ce**
**que** la position de l'unité de nettoyage (30) est modifiable en fonction de la position de l'élément optique (11).

8. Système de caméra (1) selon une des revendications précédentes,
**caractérisé en ce**
**que** l'opération de nettoyage de l'élément optique (11) est réalisable lors du transfert de l'unité de caméra (10) de la position de repos dans la position active et/ou vice-versa.

9. Système de caméra (1) selon une des revendications précédentes,
**caractérisé en ce**
**que** le nettoyage de l'élément optique (11) est réalisable par l'utilisation d'une succession d'éléments de nettoyage (31), l'emploi des produits de nettoyage (32) et/ou des éléments de nettoyage (31) pouvant être combiné.

10. Système de caméra (1) selon une des revendications précédentes,
**caractérisé en ce**
**que** l'unité de nettoyage (30) est couplée au moteur de l'unité de caméra (10) et/ou de l'élément de protection (20).

11. Système de caméra (1) selon une des revendications précédentes,
**caractérisé en ce**
**que** l'unité de nettoyage (30), en particulier l'élément de nettoyage (31), est intégré(e) sur l'élément de protection (20).

12. Système de caméra (1) selon une des revendications précédentes,
**caractérisé en ce**
**que** l'élément de nettoyage (31) contacte et nettoie mécaniquement l'élément optique (11) pendant le mouvement de l'élément de protection (20) dans sa position respective.

13. Système de caméra (1) selon une des revendications précédentes,
**caractérisé en ce**
**que** l'opération de nettoyage et/ou l'opération de séchage peuvent être activées manuellement ou automatiquement via une unité de commande.

14. Système de caméra (1) selon une des revendications précédentes,
**caractérisé en ce**
**que** l'unité de nettoyage (30) présente une zone de réception (50) dans laquelle l'élément optique (11) se trouve pendant l'opération de nettoyage, en particulier l'élément optique (11) pénétrant dans la zone de réception (50) et/ou en particulier la zone de réception (50) étant fermée pendant l'opération de nettoyage, en particulier l'élément optique (11) étant déplaçable dans la zone de réception (50) ou la zone de réception (50) déplaçable vers l'élément optique (11).

15. Système de caméra (1) selon une des revendications précédentes,
**caractérisé en ce**
**que** l'élément optique (11) présente un revêtement de surface (12) qui s'oppose à un encrassement et/ou en particulier l'unité de nettoyage (30) présentant un chauffage (33) qui permet de chauffer l'élément optique (11).
